# EUROPEAN PATENT APPLICATION

(11) **EP 2 128 054 A1**
(43) Date of publication of application: **02.12.2009**
(21) Application number: 09251407.4
(22) Date of filing: 28.05.2009
(51) Int. Cl.: B65G 69/00

(54) **Load-actuated dock bumper assembly**

(30) Priority: 28.05.2008 US 71956 P
(71) Applicant: Di Biase, Joseph J., Ontario, Canada L4L 7E7 (CA)
(72) Inventor: Di Biase, Joseph J., Ontario, Canada L4L 7E7 (CA)
(74) Representative: Howard, Paul Nicholas

(57) **Abstract**

A load-actuated dock bumper assembly for a loading dock that is displaceable along a mounting track with the vertical movement of a trailer during the loading and unloading process. The bumper assembly is comprised of a mounting bracket, a load compensating assembly housed within the mounting bracket, and a rubber bumper which is able to travel along a track on the mounting bracket. The combination of incorporating the load compensating assembly within the mounting bracket and the use of an elastically deformable strap in the load compensating assembly allows for the entire bumper assembly to maintain a low profile, thereby reducing the distance between the trailer and dock. In addition to providing a low profile, this design provides protection of the components of the bumper assembly from impact damage by trailers.

## Description

### FIELD OF THE INVENTION

The present invention relates to loading dock bumpers, and in particular to dock bumpers that are vertically displaceable through the movement of the docked trailer during the loading and unloading process.

### BACKGROUND OF THE INVENTION

Dock bumpers are installed on loading docks to protect building foundations, perimeter walls and dock equipment based on the grade of the approach and dock equipment installed. Generally, a large projection bumper at a loading dock is disadvantageous for reasons such as the increased distance trailers are kept from the building wall, thereby allowing more cold air (or warm air in air-conditioned factories in warmer climates) into the building and requiring larger dock seals; the reduction in dock leveler lip purchase; and the vehicle restraint, requiring engineered bracketing to accommodate the extra distance between the building and the docking trailers. Each of these disadvantages is associated with both safety issues and increased costs in outfitting and maintaining a loading dock.

The ongoing impact and momentum of forklifts traveling into and out of a trailer causes a gradual movement of the trailer away from the loading dock and is commonly known as "trailer creep" or "dock walk". Thus, the need to have adequate lip purchase of the dock leveler is critical. This separation eventually causes the lip of the dock leveler to lose contact with the bed of the trailer resulting in a dangerous gap between the trailer and dock. This problem is more pronounced with air-ride trailers. By minimizing the profile of the dock bumper (the distance the bumper extends from the loading dock wall), the amount of "lip purchase" by the dock leveler is increased; the potential for gaps forming between the leveler and trailer bed is reduced.

It is also known that ICC retraction bars (also known as Rear Impact Guards) can be prevented from being captured by a vehicle retraction device installed on a loading dock if the trailer is not in the correct position owing to an increased dock bumper projection. A dock bumper with an increased projection of as little as a quarter inch can affect the percentage of the ICC bars captured at a loading dock and thus compromise safety. Minimizing the profile of the dock bumper provides a greater likelihood of successful mating between the ICC bar and retraction system.

Owing to the movement of fork-lifts into and out of trailers for the purpose of loading and unloading cargo, as well as the weight of the cargo itself, trailers are caused to move up and down during the loading and unloading processes. This up and down motion, which is increased on air-ride trailers, causes abrasion to standard dock bumpers and limits their longevity. Failure to properly maintain dock bumpers can lead to structural damage to the loading dock itself.

A truck-actuated dock bumper that moves with the up and down motion of the trailer during the loading and unloading cycles would extend the life of the dock bumper. While designs of truck-actuated bumpers have been introduced into the art, none have become successful for a variety of reasons including the need of expensive load compensating systems such as springs, hydraulic shocks or gas shocks, as well as the inability of any of the previous designs to allow for a bumper to be made with a low profile design without exposing their load compensating systems to damage. Each of the prior art load compensating systems have been housed either in their own protective sleeve or behind the dock bumper in a metal cavity. In each case, the bumper projection cannot be constructed as a low profile design unless the load compensating systems are moved to an exposed position. Location of the load compensating system on either the sides or bottom of the bumper exposes the load compensating system to impact by docking trailers, snow removal equipment or vandalism, which can lead to costly repairs before the dock is usable again.

Cowey, US 7,478,801, describes a loading dock fender unit comprising a bumper guided on a track that is supported by external compression springs on each side that are connected by a bracket on the lower ends which supports the fender. This design exposes the springs to impact by the incoming trailer, with the subsequent damage rendering the springs inoperable. Protection of the external springs with a covering would increase the profile of the bumper and fail to provide adequate protection since any deformation of the protective casing through impact would impede the motion of the spring, thereby rendering the fender inoperable. Protection of the springs by placing them behind the fender will cause an increase in the profile of the fender, which in turn reduces the amount of lip purchase available to a dock leveler and the ability of a retraction device to capture the ICC bar of the trailer.

Waddell, US 2,879,985, describes a horizontal loading dock guard that is vertically displaceable. Although the bumper is able to be moved by the motion of a trailer in both an upward and downward motion, as with Cowey, the springs of the Waddell guard are exposed, making them susceptible to impact damage from an incoming trailer. In additional, the vertical displacement of the guard is limited by the supporting brackets, each of which is exposed and susceptible to impact damage by trailers.

Hougrand, FR-A 92 01635, describes a dock bumper that is vertically displaceable, however, the compression spring governing the motion of the bumper is placed behind the bumper itself causing the overall profile of the bumper to be increased. Additionally, the design of the bumper leaves both the spring and frame of the bumper exposed to impact damage.

Olofsson, SE 510800 C2, describes a truck-actuated loading dock bumper, however, the exposed spring beneath the bumper is subject to damage by trucks and the bumper is only displaceable in a downward direction. Thus, any increase in the height of the trailer on entering the loading dock cannot be compensated for by the bumper, resulting in friction damage to both the bumper and trailer.

Ward, GB 2 351 137 A, describes a truck actuated bumper, however, the bumper is only displaceable in the upward position. Thus, any decrease in the height of the trailer on entering the loading dock cannot be compensated for by the bumper, resulting in friction damage to both the bumper and trailer.

Accordingly, there is a need for a truck-actuated dock bumper wherein the bumper is vertically displaceable in both directions and in which the load compensating means is protected from damage by the trailer while maintaining a low profile in order to maximize the amount of lip purchase available to the dock leveler.

It is therefore a primary object of the invention to provide a load-actuated dock bumper which obviates the deficiencies in the prior art.

Further and other objects of the invention will become apparent to the person skilled in the art when considering the following summary of the invention and the preferred embodiments illustrated herein.

### BRIEF SUMMARY OF THE INVENTION

The truck-actuated dock bumper of the present invention offers significant advantages over known designs of dock bumpers. Most significantly, the design of the presently described truck-actuated dock bumper allows for a lower profile than known vertically displaceable dock bumpers, thereby enhancing the amount of lip purchase possible between the dock leveler and trailer bed. This increase in lip purchase reduces the potential for a dangerous gap to be formed between the loading dock and trailer bed. Additionally, the low profile of the bumper allows for a greater likelihood of trouble free mating between a vehicle retraction device and the ICC bar of the trailer.

In one aspect of the invention there is provided a low-profile, truck-actuated dock bumper comprising a mounting bracket, a replaceable load compensating assembly, and a bumper wherein the replaceable load compensating assembly is housed within the mounting bracket. The bumper is able to travel along a track formed on the mounting bracket, and is returned to its resting position from an upward position by gravity and from a downward position by contraction of the elongated load compensating assembly.

In another aspect of the present invention there is provided a mounting bracket for a dock bumper wherein the load compensating assembly is protected from damage by the trailer while continuing to allow for the bumper to maintain a low profile, thereby maximizing the amount of lip purchase possible by the dock leveler. The mounting bracket, which attaches to the loading dock wall, is preferably a hollow box section when viewed in section across its axis. The hollow cross-section allows for the load compensating assembly to be housed within the mounting bracket, thereby protecting it from damage by trailers and weathering. The presence of flanges on the corners of the box section allows for a track to be provided upon which the bumper may travel.

A further aspect of the present invention is the load compensating assembly, comprised of a resilient elastic band, which, unlike the compression springs commonly used in truck-actuated dock bumpers, cannot be damaged or rendered inoperable by impact from a trailer. Additionally, the use of a shroud around the band provides further protection against abrasion. The use of a resilient elastic band also allows for the load compensating assembly to present a much lower profile than the compression springs known in the art. As a result the load compensating assembly can be housed, and thereby protected from damage, within the hollow box section of the mounting bracket without requiring a large increase in the overall profile of the assembled dock bumper. The bottom of the load compensating assembly, which extends below the mounting bracket, contains a support upon which the bumper rests when in its resting position. The shrouded band is fastened to the bracket proximate the top thereof to tension the band and permitted to float while engaging the bracket proximate the top thereof.

A first embodiment of the present invention provides a load compensating assembly comprising a band made of a resilient material that is elastically deformable along its longitudinal axis from a relaxed position to an extended position, and which is adapted at its upper end with a mounting means and at its lower end with a restraint means; said load compensating assembly being adapted for use within a dock bumper assembly comprising a mounting bracket, a dock bumper and a load compensating assembly; wherein in use said load compensating assembly is housed within a mounting bracket of a dock bumper assembly by way of a mounting means wherein the restraint means protrudes from the bottom of the mounting bracket to provide a support upon which the dock bumper of the dock bumper assembly may sit.

In a preferred version of this embodiment the band of the load compensating assembly is comprised of at least one strap. More preferably, the band is comprised of a plurality of straps forming a layered strap.

In an additional preferred version of this embodiment, the at least one strap of the band is comprised of a polyurethane, natural rubber or silicone. More preferably, the at least one strap of the band is comprised of a silicone.

In a second embodiment of the present invention there is provided the aforementioned load compensating assembly wherein the mounting means is a housing, the housing being adapted to allow installation of the load compensating assembly within the mounting bracket of a dock bumper assembly by means of a pin.

In a third embodiment of the present invention there is provided the aforementioned load compensating assembly wherein the restraint means is a shroud, which surrounds the band and is attached to the band at its lower end, from which extends a foot, thereby providing a surface upon which the bumper of a dock bumper assembly may rest.

In a fourth embodiment of the present invention there is provided the aforementioned load compensating assembly further comprising a mounting bracket which houses the load compensating assembly and includes a track upon which the bumper travels; and a dock bumper having a rear portion adapted to travel along the track provided with the mounting bracket; wherein said load compensating assembly elongates from a relaxed position to an extended position when a downward force is exerted on the bumper, and returns to its relaxed position when said force is removed.

In a fifth embodiment of the present invention there is provided a mounting bracket which is comprised of a rear portion, which contains a means of attaching the bracket to a wall; a middle portion joining the rear portion to a front portion, and which houses the load compensating assembly; and a front portion, which is wider than the middle portion, thereby forming a track upon which the bumper may travel.

In a preferred version of this embodiment the mounting bracket, when viewed across its axis, a hollow box section possessing flanges protruding from each corner. In a further preferred variation of this embodiment, the flanges of the box section are parallel to each other.

In an additional preferred version of this embodiment the mounting bracket is comprised of a back plate, two parallel cross-members extending perpendicularly from the back plate along its axis, forming a channel covered by a front plate that forms the track upon which the bumper assembly travels, wherein said channel houses the load compensating assembly.

In a sixth embodiment of the present invention the bumper is composed of a material selected from polyethylene, polyurethane, PVC or other plastic.

In seventh embodiment of the present invention the rear portion of the bumper is composed of a backing material, and the front portion of the bumper, which is adhered to the rear portion, is composed of a material selected from polyethylene, polyurethane, PVC or other plastic. In a preferred variation of this embodiment the backing material of the rear portion of the bumper is composed of aluminum.

### BRIEF DESCRIPTION OF THE DRAWINGS

**FIG. 1** is a top view showing the hollow box section forming the mounting bracket assembled with bumper
**FIG. 2** shows the load compensating assembly (elongated)
**FIG. 3** shows a side view of the wall bracket with the load compensating assembly installed
**FIG. 4** shows a perspective view of the top portion of the wall bracket
**FIG. 5** shows a section through the wall bracket with the load compensating assembly installed
**FIG. 6** shows a section through the top of the wall bracket with the load compensating assembly installed
**FIG. 7** shows a rear view of the bumper assembly
**FIG. 8** shows a front and rear view of the bumper following upward displacement (load compensating assembly not elongated)
**FIG. 9** shows a front and rear view of the bumper following downward displacement (load compensating assembly elongated)
**FIG. 10** shows a loading dock outfitted with dock bumpers of the present invention.

### DETAILED DESCRIPTION OF THE INVENTION

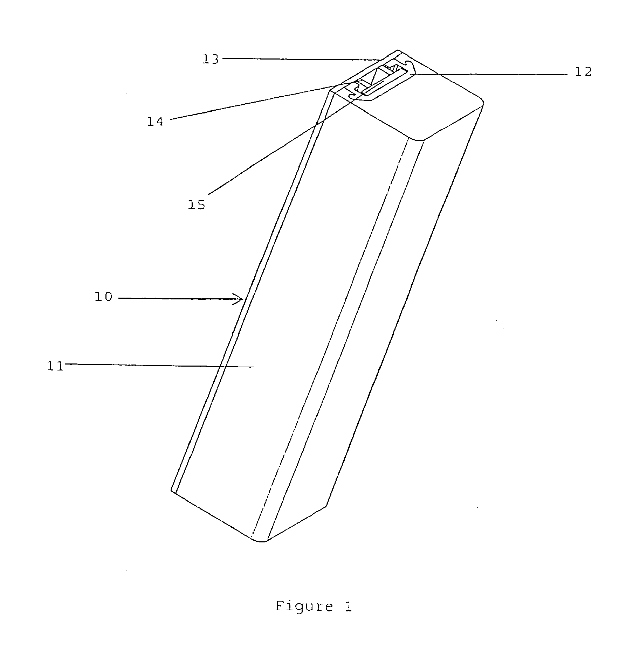

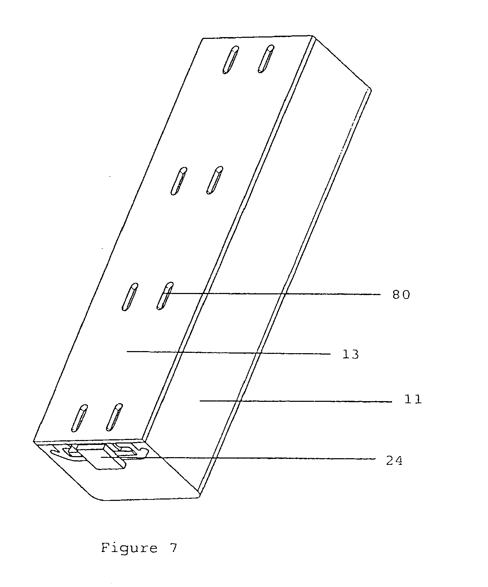

The truck-actuated dock bumper of the present invention is comprised of three components: the mounting bracket, the load compensating assembly, and the bumper. Figure 1 illustrates an assembled dock bumper (load compensating assembly not visible). The mounting bracket is a hollow box section with extended corners to provide flanges comprised of back plate **13** which is mounted to the wall of the loading dock, two parallel cross-members **14** perpendicular to **13** forming a channel when capped with front plate **15.** The open channel form houses and protects the load compensating assembly (not shown), while the front plate **15** provides a running surface or track upon which bumper backing **12** may travel since the width of the front plate is greater than that of the channel. The rubber bumper **11** is adhered to bumper backing **12** which is shaped to interact with the track formed by the flanges extending from the corners of the box section of mounting bracket **10.** The mounting bracket can be attached to the wall of the loading dock via an attachment means **80** (see FIG. 7).

The mounting bracket may be composed of any material that possesses the strength to withstand repeated impact without being deformed or fractured such as steel or aluminum. Preferably the bracket is composed of steel, owing to its ability to be easily welded to a loading dock wall.

The rubber bumper may be composed of materials such as polyethylene, polyurethane, PVC or other plastics offering good cold resistance in addition to their durability.

In one embodiment of the bumper, the rubber bumper is mounted on a backing material such as aluminum, which is adapted to interact with the track on the mounting bracket. In a second embodiment, a backing material is not required and the bumper material itself is adapted to interact with track on the mounting bracket. In this one piece embodiment the bumper will slide more easily along the track since less friction is created than with aluminum.

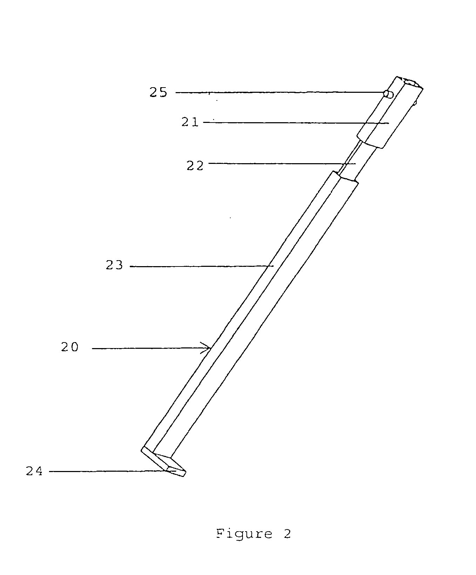

The load compensating assembly **20** (see FIG. 2) is comprised of a band, **22,** which may be formed of a single strap (shown) or a plurality of straps (not shown) forming a layered strap. The upper portion of band **22** is attached to housing **21,** and the lower portion is attached or engaged to the bottom of shroud **23.** The housing **21** and shroud **23** are constructed of metal tubing and may be attached to band **22** by crimping of the metal or any other means known in the art. Use of this tubular metal shroud provides protection of band **22** from abrasion and vandalism as well as preventing band **22** from twisting or becoming tangled at the bottom when depressed. Attached to the bottom of shroud **23** is foot **24** on which bumper **12** (not shown) rests in the assembled dock bumper. Since shroud **23** prevents twisting of band **22,** bumper **12** cannot fall off of foot **24.**

Unlike the compression springs commonly used in the art, the dock bumper of the present invention utilizes a load compensating assembly with a very low profile, which in turn allows a lower profile for the bumper assembly as a whole. In use, the band used within the assembly is stretched, an action which would damage and deform a spring.

Ideally the band **22** is composed of a material possessing a memory along its longitudinal axis such that it will contract from an extended position to a relaxed (resting) position when the force being exerted along it is released. Preferably the band is composed of a polyurethane, natural rubber, silicone, or other elastic material.

The housing **21,** shroud **23** and foot **24** are preferably composed of metal.

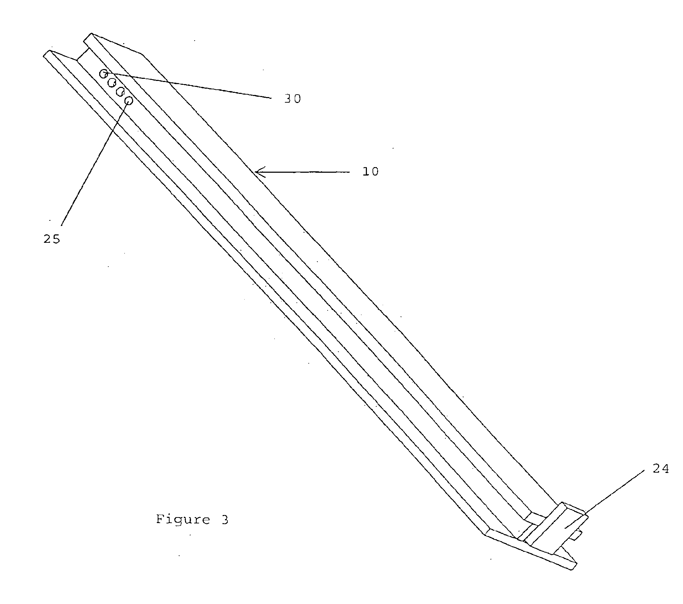

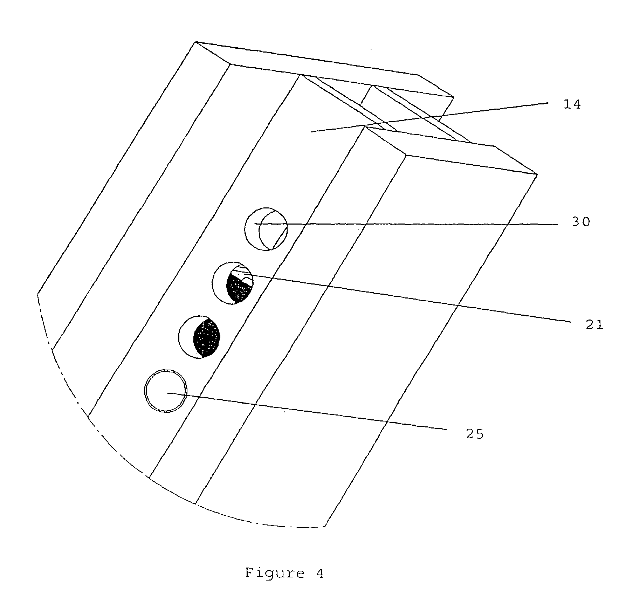

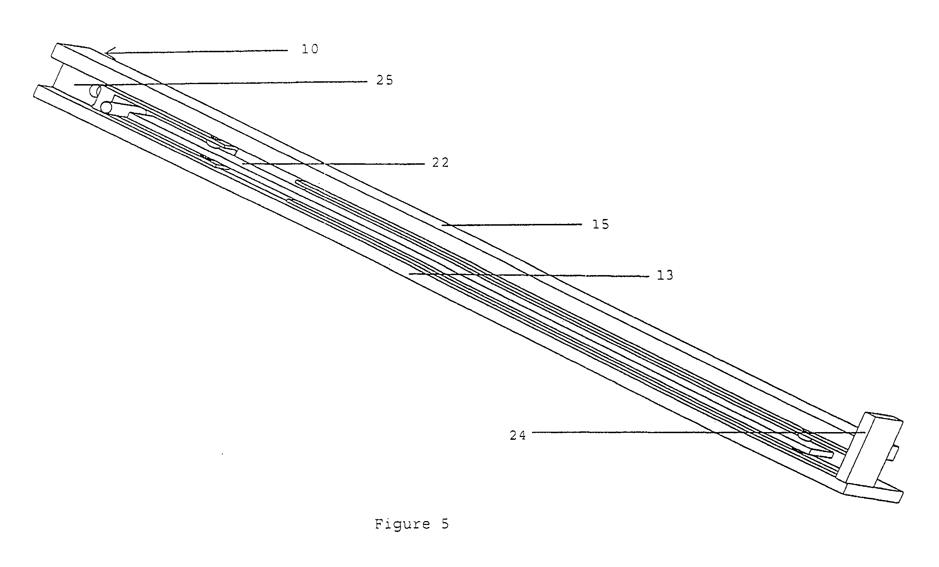

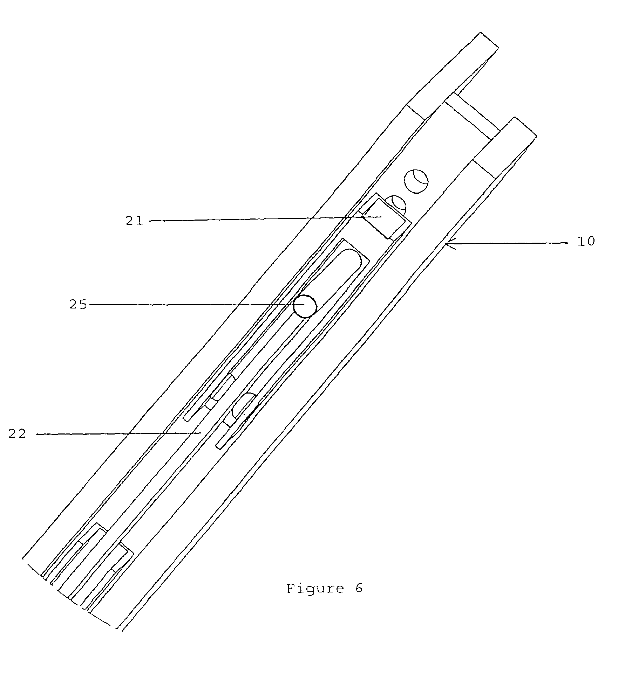

The load compensating assembly is installed within mounting bracket **10** (see FIG. 3). Installation pin **25** of the load compensating assembly is inserted through one of the tensioning holes **30** in the upper portion of cross-member **14** of mounting bracket **10.** This design allows for the load compensating assembly to be installed or replaced with ease without removal of mounting bracket **10** from the loading dock wall. Removal of installation pin **25** allows the load compensating assembly to be removed from the channel in the mounting bracket at the bottom of the bracket. Similarly, a new load compensating assembly may be installed by inserting the assembly in to the mounting bracket **10** and inserting installation pin **25** through one of the tensioning holes **30** of the mounting bracket and the housing **21** of the load compensating assembly. Foot **24** protrudes from the bottom of mounting bracket **10.** Figure 4 shows an expansion of the upper portion of mounting bracket **10** where the housing **21** of the load compensating assembly can be seen through the tensioning holes **30,** through one of which is inserted installation pin **25.** Inclusion of multiple tensioning holes **30** within cross-member **14** allows for adjustment of the load compensating assembly over time in the event that the vertical position of bumper **11** needs to be adjusted. A cross-section of the mounting bracket **10** (see Figs. 5 and 6) shows the load compensating assembly positioned within the open channel of the mounting bracket.

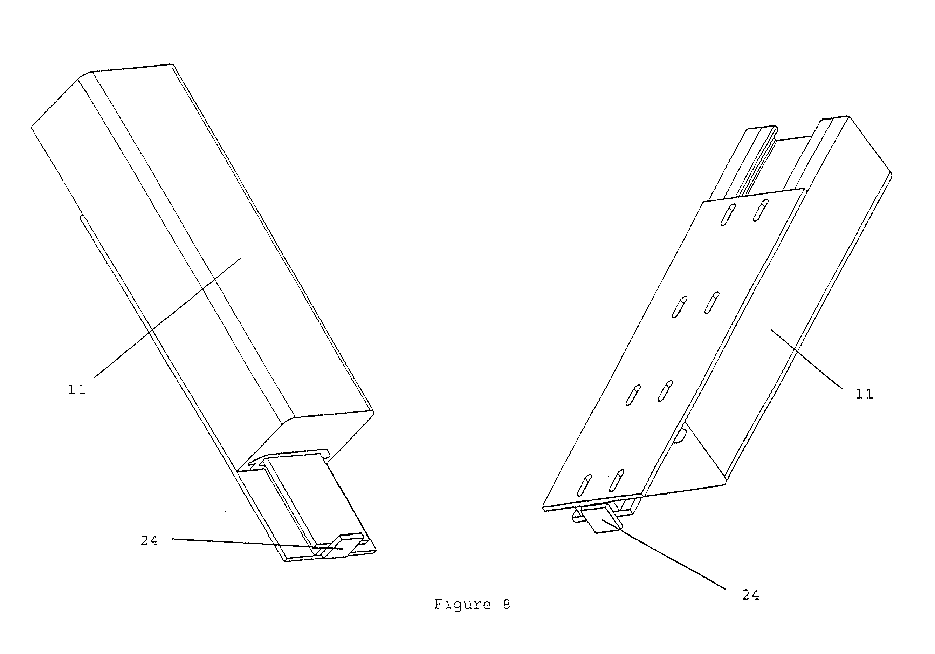

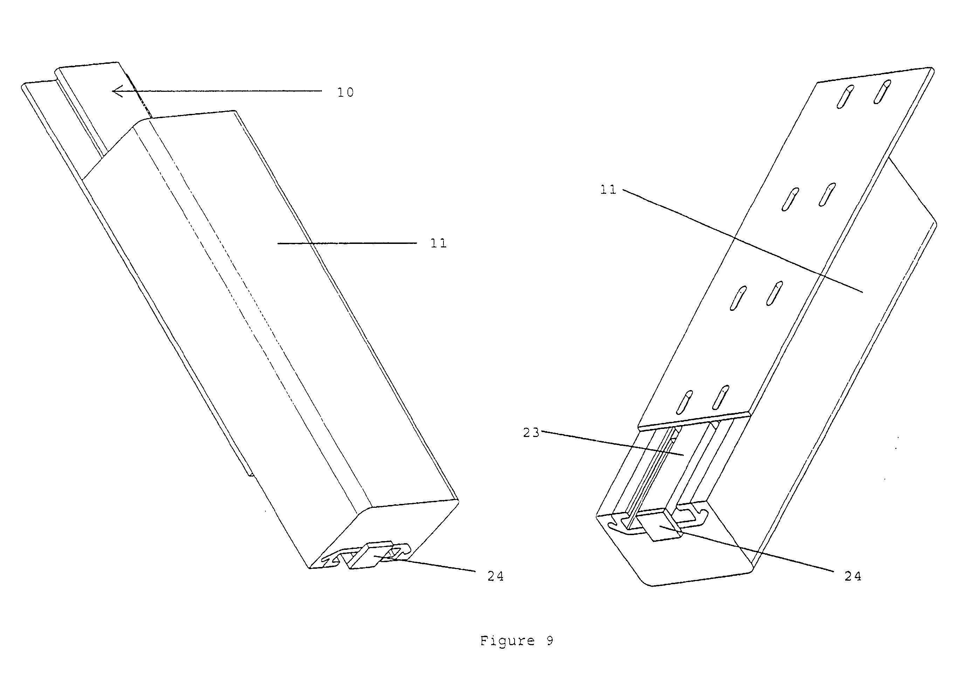

Figures 8 and 9 illustrate the upward and downward displacement of the dock bumper, respectively. In figure 8, bumper **11** has moved upward along the mounting bracket creating a gap between the bottom of the bumper **11** and foot **24.** When the force moving the bumper upward is removed, bumper **11** will fall back to its resting position on foot **24** (see FIG. 7). In figure 9, bumper **11** has been moved downward along mounting bracket **10.** The downward force of bumper **11** on foot **24** causes the band **22** (contained within sheath **23)** to elongate. When the force moving the bumper downward is removed, elongated band **22** contracts, returning bumper **11** to its relaxed (resting) position.

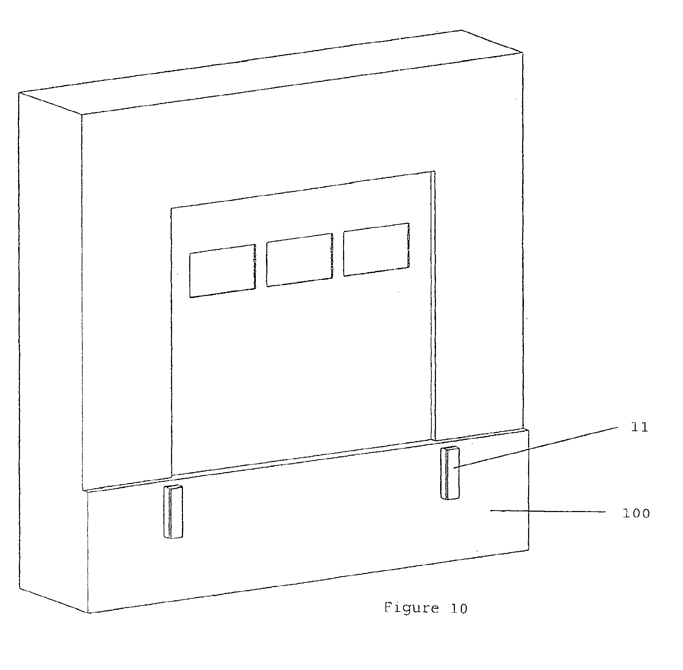

Figure 10 depicts the dock bumpers disclosed within the present application installed on a loading dock wall **100.** Bumper **11** is the only visible component of the assembly with the mounting bracket and load compensating assembly being hidden from view, and therefore protected from impact damage by incoming trailers.

Importantly, the above described dock bumper allows for an extremely low profile design that allows for a projection from the loading dock wall of as little as 3.5", while still allowing for enough resilient material in the bumper to protect the loading dock from impact damage by the trailers. By utilizing a design that minimizes the profile of the bumper without sacrificing the ability to sufficiently protect the loading dock, the amount of lip purchase available to the dock leveler is increased, minimizing the potential for dangerous gaps to be formed during the loading and unloading of trailers. The presence of such gaps between the dock leveler and trailer bed poses a large safety risk for dock personnel such as fork-lift operators.

The bumper assembly of the present invention also allows for protection of the entire assembly to impact damage by a trailer at all times. When in its resting position, the rubber bumper covers, and therefore prevents impact to, the mounting bracket, which in turn houses the load compensating assembly. Therefore, a trailer entering the loading dock will only impact the rubber bumper and not other components of the assembly, thereby minimizing the potential for damage to the dock bumper assembly.

Thus, the present invention provides a simple yet robust truck-actuated dock bumper assembly with a lower profile than those currently known in the art.

As many changes may be made to the preferred embodiments without departing from the scope thereof, it is intended that all matter contained herein be considered illustrative of the invention and not in a limiting sense.

## Claims

1. A load compensating assembly comprising a band made of a resilient material that is elastically deformable along its longitudinal axis from a relaxed position to an extended position, and which is adapted at its upper end with a mounting means and at its lower end with a restraint means;
- said load compensating assembly being adapted for use within a dock bumper assembly comprising a mounting bracket, a dock bumper and a load compensating assembly;
wherein in use said load compensating assembly is housed within a mounting bracket of a dock bumper assembly by way of a mounting means wherein the restraint means protrudes from the bottom of the mounting bracket to provide a support upon which the dock bumper of the dock bumper assembly may sit.

2. The load compensating assembly of claim 1 wherein the band is comprised of at least one strap.

3. The load compensating assembly of claim 2 wherein the at least one strap of the band is a plurality of straps forming a layered strap.

4. The load compensating assembly of any of claims 2 or 3 wherein the at least one strap of the band is comprised of a polyurethane, natural rubber or silicone.

5. The load compensating assembly of any of claims 2 or 3 wherein the at least one strap of the band is comprised of a silicone.

6. The load compensating assembly of claim 1 wherein the mounting means is a housing, the housing being adapted to allow installation of the load compensating assembly within the mounting bracket of a dock bumper assembly by means of a pin.

7. The load compensating assembly of claim 1 wherein the restraint means is a shroud, which surrounds the band and is attached to the band at its lower end, from which extends a foot, thereby providing a surface upon which the bumper of a dock bumper assembly may rest.

8. The load compensating assembly of claim 1 further comprising:
- a mounting bracket which houses the load compensating assembly and includes a track upon which the bumper travels; and
- a dock bumper having a rear portion adapted to travel along the track provided with the mounting bracket; wherein
said load compensating assembly elongates from a relaxed position to an extended position when a downward force is exerted on the bumper, and returns to its relaxed position when said force is removed.

9. The load compensating assembly of claim 8 wherein the mounting bracket is comprised of:
- a rear portion, which contains a means of attaching the bracket to a wall;
- a middle portion joining the rear portion to a front portion, and which houses the load compensating assembly; and
- a front portion, which is wider than the middle portion, thereby forming a track upon which the bumper may travel.

10. The load compensating assembly of claim 9 wherein the mounting bracket, when viewed across its axis, is a hollow box section possessing flanges protruding from each corner.

11. The load compensating assembly of claim 10 wherein the flanges on the box section of the mounting bracket are parallel to each other.

12. The load compensating assembly of claim 9 wherein the mounting bracket is comprised of a back plate, two parallel cross-members extending perpendicularly from the back plate along its axis, forming a channel covered by a front plate that forms the track upon which the bumper assembly travels, wherein said channel houses the load compensating assembly.

13. The load compensating assembly of claim 8 wherein the dock bumper is composed of a material selected from polyethylene, polyurethane, PVC or other plastic.

14. The load compensating assembly of claim 8 wherein the rear portion of the dock bumper is composed of a backing material, and the front portion of the dock bumper, which is adhered to the rear portion, is composed of a material selected from polyethylene, polyurethane, PVC or other plastic.

15. The load compensating assembly of claim 14 wherein the backing material of the rear portion of the dock bumper is composed of aluminum.
